# EUROPÄISCHE PATENTSCHRIFT

(11) **EP 1 179 465 B1**
(45) Veröffentlichungstag und Bekanntmachung des Hinweises auf die Patenterteilung: **29.03.2006**
(21) Anmeldenummer: 01119080.8
(22) Anmeldetag: 08.08.2001
(51) Int. Cl.: B61D 45/00, B60P 7/08, B64D 9/00

(54) **Vorrichtung zum Sichern von Ladungen auf einem Transportfahrzeug**
Device for securing of loads on a transport vehicle
Dispositif pour attacher des charges sur un véhicule de transport

(30) Priorität: 11.08.2000 DE 10040058
(43) Veröffentlichungstag der Anmeldung: 13.02.2002
(73) Patentinhaber: Greenbrier Germany GmbH, 31789 Hameln (DE); Railion Deutschland AG, 10179 Berlin (DE)
(72) Erfinder: Zimmer, Gunter, 26969 Butjadingen-Stollhamm (DE); Wagener, Paul Werner, 57250 Netphen (DE)
(74) Vertreter: Luderschmidt, Schüler & Partner GbR

(56) Entgegenhaltungen:
- EP-A- 0 856 450
- US-A- 3 225 708
- US-A- 3 633 516

## Beschreibung

Die vorliegende Erfindung betrifft eine Vorrichtung zum Sichern von Ladungen auf einem Transportfahrzeug gemäß dem Oberbegriff des Anspruchs 1.

Derartige Vorrichtungen sind grundsätzlich bekannt und werden zur Sicherung von Ladungen auf Ladeflächen von Transportfahrzeugen gegen auftretende Transportbeanspruchungen eingesetzt, wie z. B. zum Schutz vor Querverlagerungen von Ladegütem auf Eisenbahngüterwagen.

Bei Eisenbahntransporten sind die transportierten Güter Beanspruchungen ausgesetzt. Die Beladevorschriften Band 1, Anlage II zum RIV-Übereinkommen, veröffentlicht im Deutschen Eisenbahn-Gütertarif Teil I, Abteilung A, geben Auskunft, wie den Transportbeanspruchungen bei der Verladung der Güter im Rahmen der Ladungssicherung Rechnung zu tragen ist. Die Maßnahmen zur Ladungssicherung müssen die Betriebssicherheit gewährleisten und sollen Schäden an den Gütern und Güterwagen verhindern.

Neben den in den Beladevorschriften aufgeführten Maßnahmen zur Ladungssicherung sind aus der DE-GM 76 25 690 und US-PS 27 43 684 Vorrichtungen zur Sicherung von Ladungen gegen Verrutschen auf der Ladefläche eines Nutzfahrzeugs bekannt, bei denen auf der Ladefläche Lochschienen mit darin verankerten Halteklötzen angeordnet sind. Der Nachteil dieser Vorrichtungen besteht darin, daß nach dieser bekannten Standardtechnik eine Sicherung des Ladegutes in Querrichtung nur unzulänglich gegeben ist.

Ferner ist aus der DE-C-198 24 678 eine Vorrichtung zur Sicherung von Ladungen gegen Querverschub auf der Ladefläche eines Fahrzeugs bekannt. Hierbei ist ein Sicherungsmittel für die Ladung als Vierkantrohr ausgebildet und mittels zweier eingeschweißter Bolzen derart in Lochschienen in einem Ladeboden eines Eisenbahngüterwagens eingesetzt ist, daß sich das Vierkantrohr im wesentlichen parallel zu der Wagenlängsachse erstreckt. Die in das Vierkantrohr eingeschweißten Bolzen sind jeweils paarweise angeordnet, wobei ein Bolzen an seinem freien Ende eine Nase aufweist. Bei einer Belastung des Vierkantrohres entlang seiner Längserstreckung quer von der Wagenlängsachse weg lehnt sich der erste Bolzen gegen den Rand seiner Arretierungsbohrung in der Lochschiene an, während der zweite Bolzen mit der Nase unter die Lochschiene greift und dadurch ein Abkippen des Vierkantrohres verhindert. Bei der bekannten Vorrichtung weisen die Löcher der Lochschiene einen größeren Durchmesser als die Bolzen auf, um ein besseres Einführen der Bolzen in die Löcher zu gewährleisten. Dadurch hat das Ladungssicherungsmittel nach dem Einführen in die Löcher der Lochschiene jedoch ein gewisses Spiel, so dass sich das Ladungssicherungsmittel aus seiner Verankerung selbsttätig lösen kann. Somit besteht bei der bekannten Ladegutsicherung das Problem, dass das Ladungssicherungsmittel nicht hinreichend gegen ein Lösen aus seiner Verankerung gesichert ist.

In der US-A-3,633,516 ist eine Sicherungsvorrichtung zum Sichern einer Ladung auf einem Transportfahrzeug offenbart, bei der pfostenähnliche Sicherungselemente in Aufnahmeelemente eingesetzt werden, die in Arretierungseinrichtungen in einer Ladefläche des Transportfahrzeugs verankert sind. Die Aufnahmeelemente weisen zwei stabförmige Sicherungselemente auf, die an zwei gegenüberliegenden Seiten der Aufnahmeelemente angeschweißt sind. Zur Verankerung werden die Aufnahmeelemente in die Arretierungseinrichtungen eingesetzt, wobei die stabförmigen Sicherungselemente in hakenförmige Aufnahmestücke von gegenüberliegend angeordneten Arretierungsleisten eingreifen.

Der Erfindung liegt die Aufgabe zugrunde, eine Vorrichtung zum Sichern von Ladungen auf einem Transportfahrzeug gegen Querverschub zu schaffen, bei der Sicherungsmittel für die Ladung zum einen mit vergleichsweise geringem Aufwand auf einer Ladefläche des Fahrzeugs montierbar und zum anderen in hinreichender Weise gegen ein Lösen gesichert sind.

Die Lösung dieser Aufgabe wird durch eine Vorrichtung mit dem Merkmalen des Anspruchs 1 erreicht.

Demzufolge weist ein in einer Arretierungseinrichtung in einer Ladefläche des Transportfahrzeugs verankertes Sicherungsmittel zumindest ein Halteelement auf, das in die Arretierungseinrichtung eingeführt ist. Das Halteelement umfasst sowohl zumindest einen Verriegelungsnocken als auch zumindest einen Sicherungsnocken, die jeweils mit der Arretierungseinrichtung in Eingriff stehen. Hierdurch wird die Möglichkeit einer leichten Montage des Sicherungsmittels in der Arretierungseinrichtung mit einer Sicherung des Sicherungsmittels gegen Querverschub und Abkippen sowie gegen selbsttätiges Lösen kombiniert. Das Sicherungsmittel ist nämlich auf einfache Art und Weise mittels des Halteelements in der Arretierungseinrichtung montierbar, wobei der an dem Halteelement angebrachte Verriegelungsnocken bei Belastung des Sicherungsmittels durch das Ladegut quer zur Wagenlängsachse das Sicherungsmittel gegen Querverschub und Abkippen in der Arretierungseinrichtung sichert. Gleichzeitig wird durch den zusätzlich an dem Halteelement befindlichen Sicherungsnocken eine hervorragende Sicherung gegen ein selbsttätiges Lösen des Sicherungsmittels erreicht. Dabei ist der Sicherungsnocken derart an dem Halteelement angebracht, dass sich der Sicherungsnocken stets in Eingriff mit der Arretierungseinrichtung befindet und dadurch ein Lösen und Abheben des Sicherungsmittels wirksam verhindert.

Die Arretierungseinrichtung ist schienenförmig ausgebildet. Eine derartige Arretierungsschiene lässt sich auf einfache Weise in einem Fußboden des Wagens integrieren, so dass sie im wesentlichen bündig mit der Ladefläche abschließt. Dabei ist die Arretierungsschiene aus einer ersten und einer zweiten Leiste zusammengesetzt, wobei zwischen den beiden Leisten ein durchgehender Schlitz ausgebildet ist, in den das Halteelement des Sicherungsmittels leicht eingeführt und dadurch in Eingriff mit der Arretierungseinrichtung gebracht werden kann.

Die Randabschnitte der Leisten sind derart ausgebildet, dass die erste Leiste einen Randabschnitt mit Rasten oder Ausnehmungen und die zweite Leiste hingegen einen durchgehenden Randabschnitt aufweist. In der Arretierungsschiene sind dabei der mit den Rasten versehene Randabschnitt der ersten Leiste und der im wesentlichen gerade, durchgehende Randabschnitt der zweiten Leiste gegenüberliegend angeordnet. Durch die Rasten bzw. Ausnehmungen am Randabschnitt der ersten Leiste wird einerseits ein Einführen des Verriegelungsnockens in die Arretierungseinrichtung erleichtert. Andererseits gewährleistet der durchgehende Randabschnitt an der zweiten Leiste einen sicheren Eingriff des Sicherungsnockens unter der Arretierungseinrichtung, so dass ein Loslösen des Sicherungsmittels aus seiner Verankerung effektiv verhindert wird.

Zur Befestigung des Sicherungsmittels in der Arretierungseinrichtung greift der Verriegelungsnocken in eine der Rasten der Arretierungsschiene ein. Hierdurch kann der Verriegelungsnocken bei einer Belastung des Sicherungsmittels durch das Ladegut, sich mit einer vorzugsweise an seinem freien Ende angeordneten Nase unter der mit Rasten versehenen ersten Leiste anlegen und das Sicherungsmittel wirksam gegen Querverschub und Abkippen sichern.

Nach dem Einführen des Halteelements in die Arretierungseinrichtung wird ein selbsttätiges Lösen des Sicherungsmittels aus der Arretierungsschiene dadurch verhindert, dass der Sicherungsnocken unter dem durchgehenden Randabschnitt der Arretierungsschiene eingreift.

Nach einer vorteilhaften Ausführungsform der Erfindung weist das Sicherungsmittel eine langgestreckte, wie z. B. eine balken- oder rohrförmige, Kontur auf. Entlang der Längserstreckung des Sicherungsmittels bietet sich eine breite Anlagefläche für das Ladegut, so dass eine effektive Sicherung des transportierten Ladeguts in seinen Breitenabmessungen bei Querverschub gewährleistet ist. Als besonders vorteilhaft hat sich in diesem Zusammenhang eine im wesentlichen U-förmige Querschnittsform des Sicherungsmittels erwiesen, wobei in einem Bereich zwischen den Schenkeln des U-Profils das Halteelement befestigt werden kann.

Gemäß der Erfindung ist es weiterhin vorgesehen, dass in der Ladefläche zumindest eine Vertiefung ausgebildet ist, die als Ablagetasche für nicht im Einsatz befindliche Sicherungsmittel dient. In der Ablagetasche können die nicht für die Sicherung der zu transportierenden Ladung benötigten Sicherungsmittel verstaut und zugleich griffbereit für den nächsten Einsatz gelagert werden.

Für eine Halterung des Sicherungsmittels in der Ablagetasche erweist es sich als vorteilhaft, wenn in der Ablagetasche mehrere Stege angeordnet sind. Hierbei liegt das Sicherungsmittel in der Ablagetasche auf den Stegen auf, so dass das am Sicherungsmittel angeordnete Halteelement in einem Bereich zwischen zwei Stegen im Inneren der Ablagetasche zu liegen kommt. Hierdurch läßt sich eine Anordnung des Sicherungsmittels in der Ablagetasche erzielen, bei der eine Oberseite des Sicherungsmittels bündig mit der Ladefläche des Fahrzeugs abschließt. Eine Verletzungsgefahr an den abgelegten Sicherungsmitteln kann somit verringert werden, da über die Ladefläche vorstehende Teile vermieden und die abgelegten Sicherungsmittel sicher in der Ablagetasche gelagert werden.

Für eine bessere Handhabung des Sicherungsmittels hat es sich als vorteilhaft gezeigt, zumindest eine Aussparung in dem Sicherungsmittel vorzusehen, die als Handgriff dient. Durch die vorgesehenen Griffaussparungen läßt sich ein Sicherungsmittel auch dann problemlos greifen, wenn das Sicherungsmittel versenkt in der Ablagetasche angeordnet ist. Mittels der Handgriffe können die Sicherungsmittel leicht aus den Ablagetaschen angehoben sowie bequem und einfach in den Arretierungseinrichtungen plaziert werden.

Nach einer weiteren vorteilhaften Ausführungsform der Erfindung sind der Verriegelungsnocken und der Sicherungsnocken an entgegengesetzten Seiten des Halteelements und jeweils versetzt zueinander angebracht. Durch diese Anordnung ist sowohl ein leichtes Einführen des Halteelements in die Arretierungseinrichtung als auch eine gegen Loslösen gesicherte Verankerung des Sicherungsmittels gewährleistet.

Für eine einfache und kostengünstige Herstellung hat es sich als vorteilhaft erwiesen, den Verriegelungsnocken und/oder Sicherungsnocken einstückig mit dem Halteelement auszubilden. Dabei bildet der Verriegelungsnocken und/oder Sicherungsnocken mit dem Halteelement eine kompakte und stabile Baueinheit.

Nachfolgend wird die vorliegende Erfindung anhand einer vorteilhaften Ausführungsform rein beispielhaft unter Bezugnahme auf die beigefügten Zeichnungen näher beschrieben. Es zeigen:
- Fig. 1: eine Draufsicht einer an einer Ladefläche eines Eisenbahngüterwagens angebrachten Vorrichtung gemäß der Erfindung;
- Fig. 2: eine Seitenansicht entlang der Linie II-II in Fig. 1;
- Fig.3: einen vergrößerten Ausschnitt aus Fig. 1 mit der erfindungsgemäßen Vorrichtung in Draufsicht;
- Fig. 4: eine vergrößerte Seitenansicht der erfindungsgemäßen Vorrichtung entlang der Linie IV-IV in Fig. 3;
- Fig. 5: eine Draufsicht der erfindungsgemäßen Vorrichtung nach Fig. 4;
- Fig. 6: eine Schnittansicht der erfindungsgemäßen Vorrichtung entlang Linie VI-VI in Fig. 5; und
- Fig. 7: eine Schnittansicht der erfindungsgemäßen Vorrichtung entlang Linie VII-VII in Fig. 5.

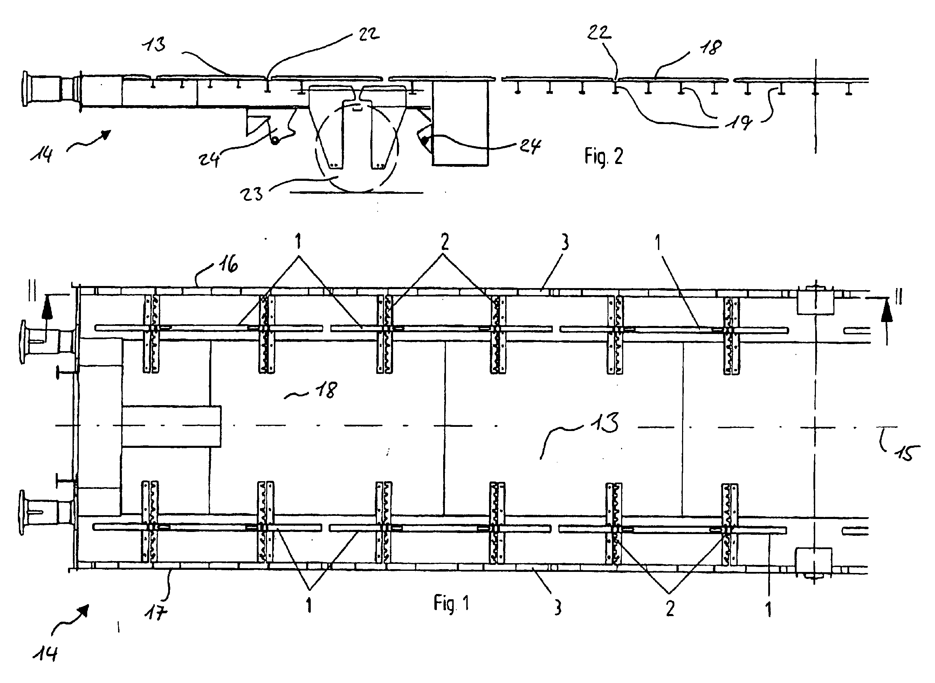

In Fig. 1 ist die Vorrichtung zum Sichern von Ladungen auf einem Transportfahrzeug 14 gemäß der Erfindung in einem auf einer Ladefläche 13 montierten Zustand dargestellt. Wie in der Draufsicht nach Fig. 1 zu erkennen, besteht die Vorrichtung aus mehreren Arretierungseinrichtungen 2, die jeweils rechtwinklig zur Wagenlängsachse 15 an Wagenlängsseiten 16, 17 angeordnet sind. Hierbei erstrecken sich jeweils sechs Arretierungseinrichtungen 2 von einer Wagenlängsseite 16, 17 senkrecht in Richtung zu der Wagenlängsachse 15. Die einzelnen Arretierungseinrichtungen 2 sind schienenförmig ausgebildet und in einem Fußboden 18 des Fahrzeugs 14 derart befestigt, daß sie nicht über die Oberfläche des Fußbodens 18 und der Ladefläche 13 hinausragen.

Ferner sind sechs langgestreckte Sicherungsmittel 1 für in Fig. 1 nicht gezeigte Ladung in den Arretierungseinrichtungen 2 verankert. Dabei ist jeweils ein Sicherungsmittel 1, das im vorliegenden Fall balkenförmig ausgebildet ist, in zwei voneinander beabstandeten Arretierungseinrichtungen 2 gelagert, so daß sich das Sicherungsmittel 1 im wesentlichen parallel zur Wagenlängsachse 15 erstreckt.

Somit besteht die auf der Ladefläche 13 befestigte Vorrichtung aus den nebeneinander angeordneten, parallel zur Wagenlängsachse 15 verlaufenden Sicherungsmitteln 1, die in den in der Ladefläche 13 des Fahrzeugs 14 integrierten Arretierungsschienen 2 verankert sind. Die auf der Ladefläche 13 zu transportierenden Ladegüter werden durch Anliegen an die im Fußboden 18 verankerten Sicherungsmittel 1 entlang ihrer Längserstreckung gegen Querverschub auf der Ladefläche 13 gesichert.

An den Wagenlängsseiten 16, 17 sind jeweils Ablagetaschen 3 vorgesehen, in die die zur Festlegung der Ladung nicht benötigten Sicherungsmittel 1 abgelegt und aufbewahrt werden können.

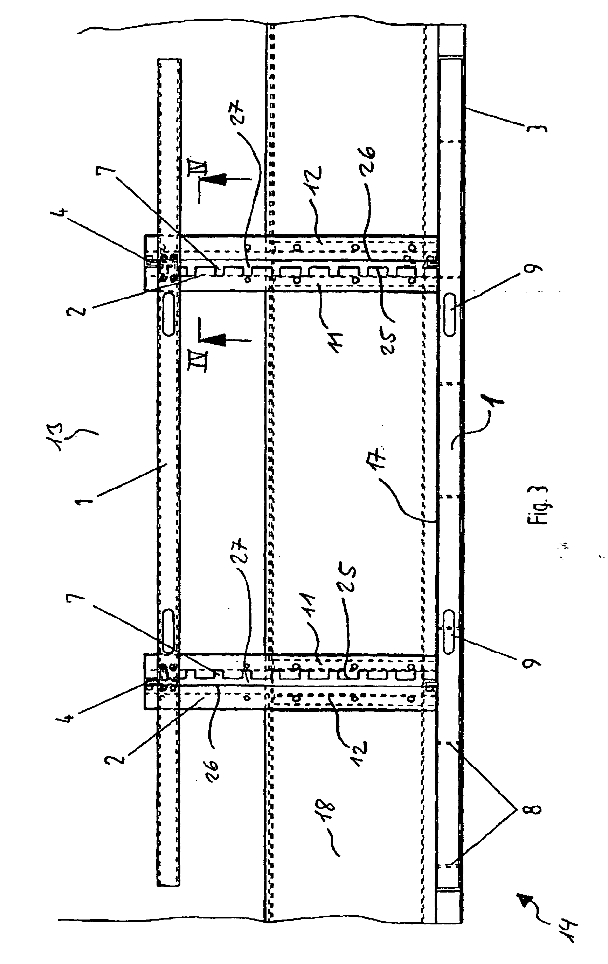

Fig. 2 zeigt eine Seitenansicht eines Eisenbahngüterwagens entlang der Linie II-II von Fig. 1 mit einem Rad 23 und Federböcken 24. Der Fußboden 18 ist mittels Auflageträgern 19 an seiner Unterseite im Transportfahrzeug 14 angeordnet. Hierbei bildet die Oberseite des Fußbodens 18 die Ladefläche 13 des Transportfahrzeugs 14 aus. Wie in Fig. 2 des weiteren zu erkennen, sind in dem Fußboden 18 Öffnungen 22 vorgesehen, die der Aufnahme der Arretierungseinrichtungen 2 dienen.

Fig. 3 zeigt einen Ausschnitt aus der Draufsicht auf die Vorrichtung nach Fig. 1 in einer vergrößerten Darstellung. Die dargestellte Vorrichtung zum Sichern von Ladungen besteht aus zwei parallel zueinander angeordneten und voneinander beabstandeten Arretierungseinrichtungen 2 und einem ersten langgestreckten Sicherungsmittel 1, das an zwei Punkten in jeweils einer Arretierungseinrichtung 2 verankert ist. Die als Arretierungsschienen ausgebildeten Arretierungseinrichtungen 2 sind rechtwinklig zu der Wagenlängsseite 17 an dem Fußboden 18 des Fahrzeugs 14 angebracht, wobei sich das erste Sicherungsmittel 1 quer über die beiden Arretierungsschienen und entlang der Wagenlängsrichtung erstreckt. An den an der Wagenlängsseite 17 angeordneten Enden der Arretierungseinrichtungen 2 befindet sich ein zweites Sicherungsmittel 1, daß sich entlang der Wagenlängsseite 17 erstreckt und in der Ablagetasche 3 angeordnet ist. Im Gegensatz zu dem ersten Sicherungsmittel 1 ist das zweite Sicherungsmittel 1 nicht in den Arretierungseinrichtungen 2 verankert, sondern liegt lose in der Ablagetasche 3 auf dort befindlichen Stegen 8 auf. Das zweite Sicherungsmittel 1 ist nicht im Einsatz, kann aber bei Bedarf in die Arretierungseinrichtungen 2 eingeführt werden, um auf der Ladefläche 13 befindliches Ladegut zu sichern.

Wie in Fig. 3 des weiteren zu erkennen, besteht die schienenförmige Arretierungseinrichtung 2 aus einer ersten 11 und einer zweiten Leiste 12 die parallel zueinander angeordnet sind. Hierbei weist die erste Leiste 11 an ihrem zu der zweiten Leiste 12 weisenden Randabschnitt 25 mehrere Rasten 7 oder Ausnehmungen auf, so daß ein im wesentlichen gezahnter Randabschnitt 25 entsteht. Hingegen ist ein dem gezahnten Randabschnitt 25 der ersten Leiste 11 gegenüberliegende Randabschnitt 26 der zweiten Leiste 12 durchgehend und im wesentlichen gerade gestaltet. Die beiden Leisten 11, 12 bildet zwischen ihren Randabschnitten 25, 26 einen Schlitz 27 aus, in den ein Halteelement 4 des Sicherungsmittels 1 eingeführt ist.

Die in Fig. 3 dargestellten Sicherungsmittel 1 können entlang des Schlitzes 27 parallel zu der Wagenlängsachse 15 verschoben und an einer gewünschten Stelle in den Arretierungseinrichtungen 2 über die Halteelemente 4 verankert werden. Hierzu kann beispielsweise das zweite Sicherungsmittel 1 über die in dem Sicherungsmittel 1 vorgesehenen zwei Aussparungen 9, die als Handgriffe dienen, angehoben, mit den an der Unterseite des Sicherungsmittels 1 befindlichen Halteelementen 4 in die Arretierungseinrichtungen 2 eingeführt und parallel zur Wagenlängsachse 15 in den Arretierungseinrichtungen 2 durch einen an dem Halteelement 4 angeordneten Sicherheitsnocken 6 geführt verschoben werden. In einem gewünschten Abstand zur Wagenlängsachse 15 kann das Sicherungsmittel dann abgesenkt und mit einem an dem Halteelement 4 befindlichen Verriegelungsnocken 5 in eine Raste 7 der Arretierungseinrichtung 2 eingeführt und dort abgelegt werden. Auf diese Weise ist das Sicherungsmittel 1 in einem beliebigen Abstand zur Wagenlängsachse 15 in den Arretierungseinrichtungen 2 verankerbar.

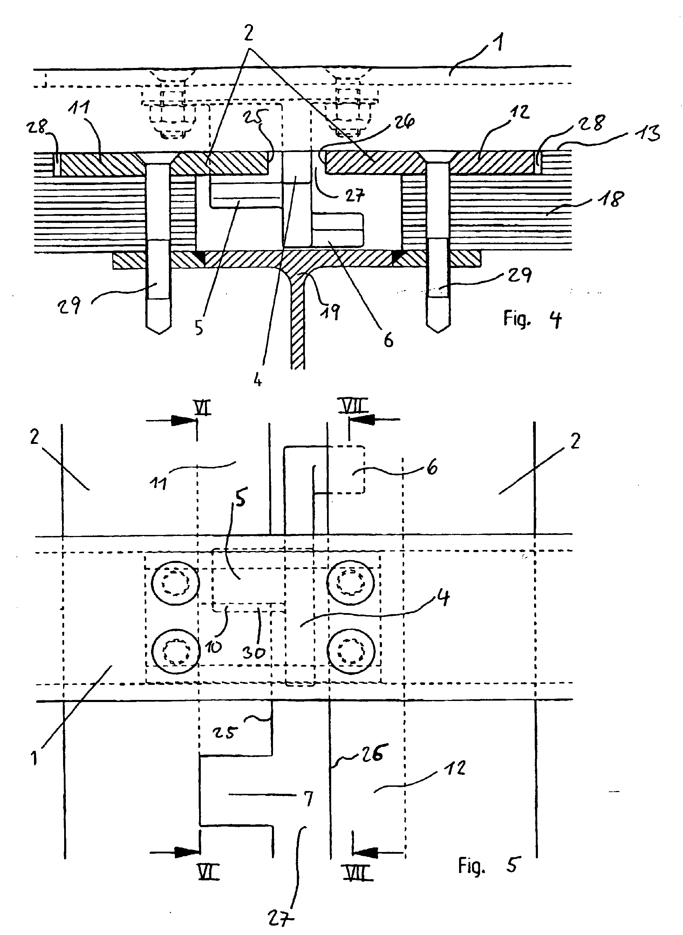

In Fig. 4 ist eine Arretierungseinrichtung 2 mit einem eingeführten Halteelement 4 und einem Sicherungsmittel 1 im Querschnitt dargestellt. Der auf dem Auflageträger 19 aufliegende Fußboden 18 weist an seiner Oberseite Vertiefungen 28 auf. In den Vertiefungen 28 sind jeweils die erste 11 und die zweite Leiste 12 der Arretierungseinrichtung 2 angeordnet, so daß die Oberseiten der Leisten 11, 12 im wesentlichen in einer Ebene mit der Ladefläche 13 liegen. Die Leisten 11, 12 sind mit Schrauben 29 derart in dem Fußboden 18 befestigt, daß sie an ihren sich gegenüberliegenden Randabschnitten 25, 26 den Schlitz 27 einschließen.

Oberhalb des Fußbodens 18 ist das Sicherungsmittel 1 angeordnet, an dessen Unterseite das Halteelement 4 angeschraubt ist. Das Halteelement 4 weist an seiner in Fig. 4 links dargestellten Seite den Verriegelungsnocken 5 und an seiner rechten Seite den Sicherungsnocken 6 auf. Der Verriegelungsnocken 5 und der Sicherungsnocken 6 sind an dem Halteelement 4 einstückig angeformt und bilden mit dem Halteelement 4 eine Baueinheit. Hierbei ist der Sicherungsnocken 6 an dem Halteelement 4 unterhalb des Verriegelungsnockens 5 angebracht, so daß der Verriegelungs- und der Sicherungsnocken jeweils in unterschiedlichen Höhen an dem Halteelement 4 angeformt sind. Der Sicherungsnocken 6 ist unter der zweiten Leiste 12 mit dem durchgehenden Randabschnitt 26 angeordnet und hat die Funktion das Sicherungsmittel 1 gegen Abheben und Verlieren zu sichern. Der Verriegelungsnocken 5 greift hingegen in die erste Leiste 11 mit dem gezahnten Randabschnitt 25 ein und verhindert durch seinen Eingriff, daß sich das Sicherungsmittel 1 in Querrichtung verschiebt oder von der Ladefläche 13 abkippt.

In der in Fig. 5 dargestellten Draufsicht auf Fig. 4 ist der Eingriff des Halteelements 4 mit der Arretierungseinrichtung 2 dargestellt. Das Halteelement 4, das sich an der Unterseite des Sicherungsmittels 1 befindet, ist in dem Schlitz 27 eingeführt. Dabei kommt der Sicherungsnocken 6 unterhalb des durchgehenden Randabschnitts 26 der zweiten Leiste 12 zu liegen. An der entgegengesetzten linken Seite des Halteelements 4 ist in Längsrichtung des Halteelements 4 versetzt der Verriegelungsnocken 5 angebracht. Der Verriegelungsnocken 5 greift in eine Ausnehmung oder Raste 7 des gezahnten Randabschnitts 25 der ersten Leiste 11 ein, wobei eine an seinem freien Ende angeformte Nase 10 in Eingriff mit einem Randbereich 30 der Raste 7 steht. Bei Belastung durch das Ladegut quer zur Wagenlängsachse 15 legt sich der Verriegelungsnocken 5 mit seiner Nase 10 unter den Randbereich 30 der ersten Leiste 11 an und sichert dadurch das Sicherungsmittel 1 gegen einen Querverschub.

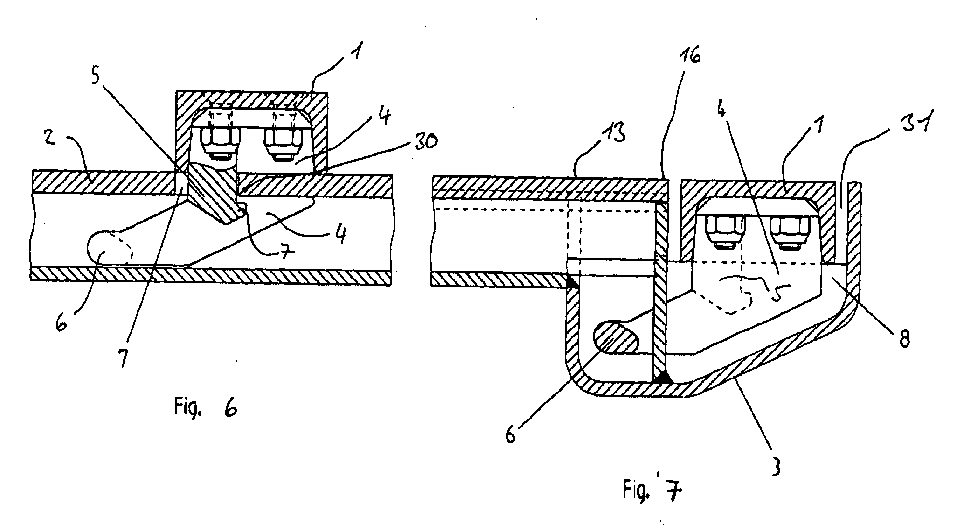

Fig. 6 zeigt einen Schnitt durch die Vorrichtung nach Fig. 5 entlang der Schnittebene VI-VI. Das Sicherungsmittel 1 weist eine im wesentlichen U-förmige Querschnittsform auf, wobei in dem Bereich zwischen den beiden Schenkeln des U-Profils das Halteelement 4 an der Innenseite des Sicherungsmittels 1 angeschraubt ist. Das Halteelement 4 steht in Eingriff mit der Arretierungseinrichtung 2, wobei der Verriegelungsnocken 5 in einer Ausnehmung bzw. Raste 7 der ersten Leiste 11 eingeführt ist und mit seiner Nase 7 unterhalb des Randbereichs 30 der Raste 7 zu liegen kommt. Am unteren Ende des Halteelements 4 ist in Fig. 6 der Sicherungsnocken 6 angedeutet, der sich an der hinteren Seite des Halteelements 4 senkrecht in die Zeichnungsebene hinein erstreckt. Somit sind der Verriegelungsnocken 5 und der Sicherungsnocken 6 in unterschiedlichen Höhen an dem Halteelement 4 sowie an entgegengesetzten Seiten des Halteelements 4 jeweils im wesentlichen rechtwinklig zum Halteelement 4 angebracht. Durch diese unterschiedliche Anordnung des Verriegelungs- und Sicherungsnockens an dem Halteelement ist es möglich, das Halteelement 4 einfach in die Arretierungseinrichtung 2 einzuführen, entlang des Schlitzes 27 durch den Sicherungsnocken 6 geführt zu verschieben und schließlich mit dem Verriegelungsnocken 5 in einer Raste 7 der Arretierungseinrichtung 2 zu verriegeln.

In Fig. 7 ist ein Schnitt durch die Vorrichtung von Fig. 5 entlang der Schnittebene VII-VII dargestellt. Die Arretierungseinrichtung 2 mündet an ihrem zu der Wagenlängsseite 16, 17 weisenden Ende in einer Vertiefung 31 in der Ladefläche 13. Die Vertiefung 31 dient als Ablagetasche 3 für ein nicht im Einsatz befindliches Sicherungsmittel 1. Durch Verschieben des Sicherungsmittels 1 zur Wagenlängsseite 16, 17 hin kann das Halteelement 4 in die Vertiefung 31 abgesenkt und damit das Sicherungsmittel 1 in die Ablagetasche 3 abgelegt werden. In der Ablagetasche 3 befindet sich das Sicherungsmittel 1 auf den dort angeordneten Stegen 8, so daß die Oberseite des Sicherungsmittels 1 mit der Ladefläche 13 in einer Ebene zu liegen kommt. Das nicht im Einsatz befindliche Sicherungsmittel 1 kann in der Ablagetasche 3 zum einen fest und sicher gelagert werden. Zum anderen ist ein schneller Zugriff auf das an der Wagenlängsseite 16, 17 gelagerte Sicherungsmittel 1 möglich, das mit geringem Aufwand aus der Aufbewahrungslage in der Ablagetasche 3 direkt in die Arretierungseinrichtung 2 eingeführt und bei Bedarf montiert werden kann.

## Patentansprüche

1. Vorrichtung zum Sichern von Ladungen auf einem Transportfahrzeug (14) mit mindestens einer schienenförmig ausgebildeten Arretierungseinrichtung (2), die eine erste Leiste (11) und eine zweite Leiste (12) umfasst und in einer Ladefläche (13) des Transportfahrzeugs (14) angeordnet ist, und zumindest einem Sicherungsmittel (1), das mittels mindestens eines Halteelements (4) in der Arretierungseinrichtung (2) verankert ist, wobei das Halteelement (4) zumindest einen Verriegelungsnocken (5) zum Sichern des Sicherungsmittels (1) gegen Querverschub und Abkippen in einer arretierten Position und zumindest einen Sicherungsnocken (6) zum Sichern des Sicherungsmittels (1) gegen selbsttätiges Lösen und Verlieren in einer nicht arretierten Position umfasst, **dadurch gekennzeichnet, dass** die erste Leiste (11) der Arretierungseinrichtung (2) an einem Randabschnitt (25) Rasten (7) und die zweite Leiste (12) der Arretierungseinrichtung (2) einen durchgehenden Randabschnitt (26) aufweist und der Verriegelungsnocken (5) zum Arretieren in eine der Rasten (7) der Arretierungseinrichtung (2) eingreift.

2. Vorrichtung nach Anspruch 1, **dadurch gekennzeichnet, dass** das Sicherungsmittel (1) langgestreckt ausgebildet ist.

3. Vorrichtung nach Anspruch 1 oder 2, **dadurch gekennzeichnet, dass** diese zumindest eine Ablagetasche (3) für das Sicherungsmittel (1) umfasst.

4. Vorrichtung nach Anspruch 3, **dadurch gekennzeichnet, dass** in der Ablagetasche (3) mehrere Stege (8) angeordnet sind.

5. Vorrichtung nach zumindest einem der vorangehenden Ansprüche, **dadurch gekennzeichnet, dass** das Sicherungsmittel (1) zumindest eine Aussparung (9) aufweist, die als Handgriff dient.

6. Vorrichtung nach zumindest einem der vorangehenden Ansprüche, **dadurch gekennzeichnet, dass** der Verriegelungsnocken (5) an seinem freien Ende eine Nase (10) aufweist.

7. Vorrichtung nach Anspruch 6, **dadurch gekennzeichnet, dass** der Sicherungsnocken (6) unter dem durchgehenden Randabschnitt (26) der Arretierungseinrichtung (2) eingreift.

8. Vorrichtung nach zumindest einem der vorangehenden Ansprüche, **dadurch gekennzeichnet, dass** der Verriegelungsnocken (5) und der Sicherungsnocken (6) an entgegengesetzten Seiten des Halteelements (4) und versetzt zueinander angebracht sind.

9. Vorrichtung nach zumindest einem der vorangehenden Ansprüche, **dadurch gekennzeichnet, dass** der Verriegelungsnocken (5) und/oder der Sicherungsnocken (6) einstückig mit dem Halteelement (4) ausgebildet sind.

## Claims

1. Device for securing loads on a transport vehicle (14) with at least one locking device (2) designed in the shape of a rail, which device comprises a first strip (11) and a second strip (12), and is arranged in a loading plane (13) of the transport vehicle (14), and with at least one securing means (1), which is anchored by means of at least one retaining element (4) in the locking device (2), wherein the retaining element (4) comprises at least one interlocking cam (5) for protecting the securing means (1) against transverse displacement and tilting in a locked position, and at least one securing cam (6) for protecting the securing means (1) against automatic loosening and loss in an unlocked position, **characterised in that** the first strip (11) of the locking device (2) exhibits catches (7) on one edge section (25), **in that** the second strip (12) of the locking device exhibits a continuous edge section (26), and **in that** the interlocking cam (5) engages in one of the catches (7) of the locking device (2) for locking purposes.

2. Device according to claim 1, **characterised in that** the securing means (1) has an elongated design.

3. Device according to claim 1 or 2, **characterised in that** it incorporates at least one storage pocket (3) for the securing means (1).

4. Device according to claim 3, **characterised in that** several ridges (8) are arranged in the storage pocket (3).

5. Device according to at least one of the preceding claims, **characterised in that** the securing means (1) exhibits at least one recess (9) which serves as a handle.

6. Device according to at least one of the preceding claims, **characterised in that** the interlocking cam (5) exhibits a nose (10) at its free end.

7. Device according to claim 6, **characterised in that** the securing cam (6) engages underneath the continuous edge section (26) of the locking device (2).

8. Device according to at least one of the preceding claims, **characterised in that** the interlocking cam (5) and the securing cam (6) are fitted on opposite sides of the retaining element (4), offset relative to each other.

9. Device according to at least one of the preceding claims, **characterised in that** the interlocking cam (5) and/or the securing cam (6) are designed so that they are integral with the retaining element (4).

## Revendications

1. Dispositif de fixation de chargements sur un véhicule de transport (14) avec au moins un dispositif de blocage (2) en forme de rail qui comprend une première barre (11) et une deuxième barre (12) et est disposé dans une surface de chargement (13) du véhicule de transport (14), et au moins un dispositif de fixation (1) qui est ancré dans le dispositif de blocage (2) au moyen d'au moins un élément de maintien (4), l'élément de maintien (4) comprenant au moins une came de verrouillage (5) pour la fixation du dispositif de fixation (1) dans une position de blocage afin d'empêcher un déplacement transversal et un renversement, et au moins une came de fixation (6) pour empêcher le dispositif de fixation (1) de se détacher de manière autonome et de se perdre dans une position de non blocage, **caractérisé en ce que** la première barre (11) du dispositif d'arrêt (2) comporte des crans d'arrêt (7) sur une section de bord (25) et la deuxième barre (12) du dispositif d'arrêt (2) une section de bord continue (26) et **en ce que** la came de verrouillage (5) prend prise dans un des crans d'arrêt (7) du dispositif de blocage (2) pour le bloquer.

2. Dispositif selon la revendication 1, **caractérisé en ce que** le dispositif de fixation (1) est allongé longitudinalement.

3. Dispositif selon la revendication 1 ou 2, **caractérisé en ce qu'**il comprend au moins une poche de rangement (3) pour le dispositif de fixation (1).

4. Dispositif selon la revendication 3, **caractérisé en ce que** plusieurs traverses (8) sont disposées dans la poche de rangement (3).

5. Dispositif selon au moins une des revendications précédentes, **caractérisé en ce que** le dispositif de fixation (1) comporte au moins un évidemment (9) qui sert de poignée.

6. Dispositif selon au moins une des revendications précédentes, **caractérisé en ce que** la came de verrouillage (5) comporte un nez (10) à son extrémité libre.

7. Dispositif selon la revendication 6, **caractérisé en ce que** la came de fixation (6) entre en prise sous la section de bord continue (26) du dispositif de blocage (2).

8. Dispositif selon au moins une des revendications précédentes, **caractérisé en ce que** la came de verrouillage (5) et la came de fixation (6) sont disposées sur des côtés opposés de l'élément de maintien (4) et décalés l'une par rapport à l'autre.

9. Dispositif selon au moins une des revendications précédentes, **caractérisé en ce que** la came de verrouillage (5) et/ou la came de fixation (6) sont réalisées d'un tenant avec l'élément de maintien (4).
